# EUROPÄISCHE PATENTSCHRIFT

(11) **EP 3 712 531 B1**
(45) Veröffentlichungstag und Bekanntmachung des Hinweises auf die Patenterteilung: **04.11.2026**
(21) Anmeldenummer: 20152461.8
(22) Anmeldetag: 17.01.2020
(51) Int. Cl.: F24F 11/36, F24F 11/89, F24F 3/00, F24F 12/00, F24F 1/022, F25B 49/00, F25B 25/00

(54) **SICHERHEITSSPÜLVORRICHTUNG FÜR EINE WÄRMEPUMPE**
SAFETY VENTILATION DEVICE FOR A HEAT PUMP
DISPOSITIF DE RINÇAGE DE SÉCURITÉ POUR UNE POMPE À CHALEUR

(30) Priorität: 22.03.2019 DE 102019107373; 09.08.2019 DE 102019121496
(43) Veröffentlichungstag der Anmeldung: 23.09.2020
(73) Patentinhaber: Vaillant GmbH, 42859 Remscheid (DE)
(72) Erfinder: Paulus, Jochen, 42655 Solingen (DE); Billek, Ramon, 42857 Remscheid (DE)
(74) Vertreter: Popp, Carsten

(56) Entgegenhaltungen:
- DE-A1- 102014 112 545
- DE-T2- 69 622 294
- FR-A1- 3 070 755
- JP-A- H09 324 928
- US-A- 4 655 278

## Beschreibung

Die Erfindung betrifft irreguläre Zustände in Kältekreisen, in denen ein als Kältemittel wirkendes, gefährliches Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Insbesondere betrifft die Erfindung eine Wärmepumpe, die innerhalb eines Wohngebäudes aufgestellt wird und auch Belüftungszwecke erfüllt.

Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014. Dadurch werden praktisch alle ungefährlichen Sicherheitskältemittel verboten und es bleiben nur noch gefährliche Arbeitsfluide und Wasser zur Auswahl. Gefährlich bedeutet in diesem Fall, dass sie entweder giftig sind, wie zum Beispiel Ammoniak, oder entzündlich oder explosiv in Verbindung mit Luftsauerstoff sein können, jedoch kaum umweltschädlich sind.

Es ist daher einerseits äußerst problematisch, die konstruktiven Prinzipien für Kältemittel-führende thermodynamische Prozesse zu übernehmen, die sich bei Sicherheitskältemitteln scheinbar gut bewährt haben, andererseits auf die Anlagenkonzepte aus der Zeit vor Einführung der Sicherheitskältemittel aufzusetzen. Dies liegt auch daran, dass inzwischen aus Einzelgeräten komplexe Anlagen geworden sind, was die Anzahl der Möglichkeiten für Störungen und deren Folgen vervielfältigt hat. Hierdurch ergeben sich beispielhaft die folgenden Anforderungen an das Sicherheitskonzept:
- Im Normalbetrieb muss die Anlage absolut dicht sein.
- Weder bei einer Leckage im Kondensator noch bei einer Leckage im Verflüssiger darf Arbeitsfluid in den gekoppelten Nutzwärme- oder Nutzkältekreislauf gelangen.
- Es darf kein Arbeitsfluid aus dem Kältekreislauf unbemerkt entweichen können.
- Im Verdichter darf das Arbeitsfluid nicht durch die Lagerung entweichen.
- Im Entspannungssystem darf das Arbeitsfluid nicht durch den Ventilsitz diffundieren oder durch Kavitation zu Leckagen führen.
- Gekapselte Teile müssen für Wartungs- und Kontrollzwecke zugänglich bleiben.
- In Notfällen dürfen sich keine Gefahren einstellen.
- Die Anlage soll in vorhandene Räumlichkeiten integrierbar sein
- Das Kältemittel bzw. Arbeitsfluid soll abgelassen und eingefüllt werden können.

Der Begriff des Notfalls muss weit gesehen werden. Denkbar sind externe Ursachen wie Stromausfälle, Erdbeben, Erdrutsche, Überschwemmungen, Brände und klimatische Extrembedingungen sowie interne Ursachen wie technische Fehler oder Bedienungsfehler. Sofern die Anlagen in einem Netzwerk betrieben werden, ist auch ein Netzausfall oder eine Netzstörung als Notfall anzusehen. Gegenüber solchen Gefahren oder Störungen soll die Vorrichtung inhärent sicher sein. Aber auch ein Ausfall der verfügbaren Primärenergie kann einen Notfall begründen und darf keine Gefahrentwicklung zur Folge haben. Alle diese Notfälle können auch kombiniert auftreten; zu unterscheiden ist ferner, ob der Notfall nur ein Bedrohungsszenario darstellt oder ob bereits eine Havarie eingetreten ist.

Hierbei sind die verschiedenen Bauformen und Anwendungsfälle für derartige thermodynamische Kreisprozesse gesondert zu berücksichtigen, bei ortsfesten Anlagen für Wohngebäude, die innerhalb der Wohngebäude aufgestellt werden, beispielsweise folgende:
- Haushaltskühlschränke,
- Haushaltsgefrierschränke,
- Haushaltstrockner,
- Haushaltskühl-Gefrierkombinationen,
- Kühlkammern für Hotel- und Gastronomie,
- Gefrierkammern für Hotel- und Gastronomie,
- Klimaanlage für Haus, Hotel- und Gastronomie,
- Warmwassererzeugung für Haus, Hotel- und Gastronomie,
- Beheizung für Haus, Hotel- und Gastronomie,
- Sauna-Schwimmbadanlagen für Haus, Hotel- und Gastronomie,
- Belüftungen, und
- kombinierte Anlagen für die oben genannten Anwendungen,
wobei diese Aufzählung nicht vollständig ist.

Die Energie für den Betrieb der Anlagen einschließlich der zu verschiebenden Wärmeenergie kann aus verschiedenen Quellen stammen:
- Erdwärme aus Erdwärmespeichern,
- Geothermische Wärme,
- Fernwärme,
- Elektrische Energie aus allgemeiner Stromversorgung,
- Elektrische Solarenergie,
- Solarwärme,
- Abwärme,
- Warmwasserspeicher,
- Eisspeicher,
- Latentwärmespeicher,
- Fossile Energieträger wie Erdgas, Erdöl, Kohle,
- Nachwachsende Rohstoffe wie Holz, Pellets, Biogas,
- Außenluft,
- Kombinationen aus den oben genannten Energiequellen,
wobei auch diese Aufzählung nicht vollständig ist.

Die auftretenden Probleme bei der Sicherheitsauslegung solcher Anlagen werden in der WO 2015/032905 A1 anschaulich beschrieben. So liegt die untere Zündgrenze von R290 als Arbeitsfluid etwa bei 1,7 Volumenprozent in Luft, was 38 g/m³ in Luft entspricht. Sofern der Kälteprozess in einem ihn umgebenden, hermetisch abgeschlossenen, ansonsten aber luftgefüllten Raum mit dem Arbeitsfluid R290 durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die Propan-Erkennung durch die Sensoren selbst das Explosionsrisiko erheblich verschärft, ausgenommen hiervon sind Infrarotsensoren. R290 ist auch giftig, bei Inhalation oberhalb einer Konzentration von ca. 2 g/m³ stellen sich narkotische Effekte, Kopfschmerzen und Übelkeit ein. Dies betrifft Personen, die ein erkanntes Problem vor Ort lösen sollen, noch bevor Explosionsgefahr entsteht.

R290 ist auch schwerer als Luft, sinkt also in ruhender Luft auf den Boden und sammelt sich dort an. Sollte sich also ein Teil des Propans in einer strömungsarmen Zone des abgeschlossenen Raums, in dem sich das gestörte Aggregat befindet, sammeln, können die lokalen Explosionsgrenzen wesentlich schneller erreicht werden, als es der Quotient aus Gesamtraumvolumen zu ausgetretener R290-Menge erwarten lässt. Die WO 2015/032905 A1 sucht dieses Problem zu lösen, indem ein Generator für elektrischen Strom in die Öffnung bzw. deren Verriegelung dieses Raums integriert wird und bei deren Betätigung in einem ersten Schritt die elektrische Energie erzeugt und bereitstellt, mit der der Sensor aktiviert wird, und der im Alarmfall die Verriegelung dann nicht freigibt, sondern eine Lüftung des abgeschlossenen Raums veranlasst, und erst in einem zweiten Schritt eine Entriegelung und Öffnung zulässt.

Die DE 10 2009 029 392 A1 beschreibt eine explosionsgeschützte Kälteanlage, bei der ein Lüfter die kontaminierte Luft innerhalb einer gasdichten Umhausung im Falle einer Leckage die Umhausung leersaugt, nachdem alle Geräte ausgeschaltet worden sind. Die Leckage wird durch einen Gassensor detektiert. Das abgezogene Gemisch wird in die Umgebung gefördert, wo es sich in kürzester Zeit mit Umgebungsluft vermischt und soweit verdünnt wird, dass kein explosives Gemisch mehr vorliegt. Die Vorrichtung soll überall da eingesetzt werden, wo Kälteanlagen zur Kühlung benötigt werden und gleichzeitig ein Wärmebedarf vorhanden ist, und wird bevorzugt in einer Supermarktkälteanlage eingesetzt.

Die DE 20 2016 103 305 U1 beschreibt eine explosionsgeschützte Vorrichtung zum Temperieren von Wärmeträgerfluiden auf unterschiedlichen Temperaturniveaus aufweisend eine Umhausung, ein Grundelement, einen geschlossenen Kältemittelkreislauf mit den üblichen Apparaten, eine Absaugvorrichtung mit einem Lüfter und einem Gassensor zur Detektion von entzündlichem Gas. Die Wärmeübertrager sind außerhalb der Umhausung positioniert. Sofern der Sensor anschlägt, wird eine Leckage vermutet und der Lüfter saugt das Gemisch aus der Umhausung in einen Kanal, der an einen Ort außerhalb der Umhausung führt. Die Vorrichtung hat seinen bevorzugten Einsatzort in einem Einkaufszentrum.

Die vorgestellten Systeme sind aufwendig, sie hatten am Markt bislang nur wenig Erfolg. Dies kann auf die folgenden Gründe zurückgeführt werden:
- Montagefreundlichkeit: Im Falle von Modernisierungen von alten Heizungsanlagen müssen die neu zu installierenden Vorrichtungen zerlegbar und transportabel sein. Beispielsweise müssen sie über Kellertreppen und in verwinkelte und niedrige Kellerräume verbracht werden können. Zusammenbau, Inbetriebnahme und Wartung müssen ohne großen Aufwand vor Ort möglich sein. Dies schließt große und schwere Druckbehälter weitgehend aus, ferner Systeme, die nach einer Havarie nicht mehr demontierbar sind.
- Diagnosefreundlichkeit: Die Betriebszustände sollten von außen gut erkennbar sein, dies betrifft die Sichtbarkeit und Prüfbarkeit bezüglich möglicher Leckagen und schließt den Füllstand des Arbeitsfluids sowie den Befüllungsgrad ggf. eingebrachter Sorbenzien ein.
- Wartungsfreundlichkeit: Systemdiagnosen sollten ohne großen zusätzlichen Aufwand erfolgen können. Sicherheitsrelevante Systeme sollten regelmäßig getestet bzw. auf ihre Zuverlässigkeit geprüft werden können. Sofern Systemdiagnosen nicht einfach durchführbar sind, sollten möglicherweise belastete Teile leicht durch Neuteile austauschbar sein.
- Ausfallsicherheit: Die Systeme sollen einerseits gegen Störungen gesichert sein, gleichzeitig aber zuverlässig laufen können, wenigstens im Notbetrieb. Im Falle einer vorübergehenden externen Störung sollten die Systeme entweder selbstständig wieder anfahren oder ohne großen Aufwand wiederangefahren werden können.
- Energieeffizienz: Die Anlagen sollen energetisch günstig betrieben werden können, ein hoher Eigenverbrauch an Energie für Sicherheitsmaßnahmen wirkt dem entgegen.
- Robustheit: Im Falle größerer Störungen, seien sie extern oder systemintern aufgeprägt, muss die Beherrschbarkeit gewährleistet sein, dies betrifft z.B. Lüftungssysteme, die verstopfen können oder Druckbehälter, die unter Druck stehen oder heiß werden, etwa bei einem Brand.
- Kosten: Die Sicherheitsmaßnahmen sollen weder bei den Anschaffungskosten noch bei den laufenden Kosten bedeutend sein und die Einsparungen bei den Energiekosten gegenüber herkömmlichen Systemen übersteigen. Sie sollen günstig sein.

Die Anforderungen schließen sich zumeist gegenseitig aus und erzeugen außerdem Zielkonflikte in großer Zahl. Hinzu kommt eine weitere Anforderung für den Fall, dass das Wohngebäude belüftet bzw. klimatisiert werden soll. In solchen Fällen werden bisher Kombigeräte verwendet, die aus Belüftungsgerät, Wärmepumpe und Klimagerät bestehen. Die Außenluft gelangt von außen in das Kombigerät. Über einen Filter wird die Außenluft gereinigt und einem Wärmeübertrager zugeführt. Der Wärmeübertrager überträgt die Wärme der Abluft an die Außenluft. Die erwärmte Außenluft wird als Zuluft in die Wohnung geführt. Die Abluft der Wohnung wird in das Kombigerät geführt. Über einen Filter wird die Abluft gereinigt und einem Wärmeübertrager zugeführt. Der Wärmeübertrager entzieht der Abluft die Wärme und betreibt so Wärmerückgewinnung. Die abgekühlte Abluft wird als Fortluft nach außen geführt.

In Sommernächten kann die Außentemperatur unter der Raumtemperatur liegen. Durch den automatischen Bypass wird die kühlere Außenluft nicht mehr durch den Wärmeübertrager vorgewärmt. Der Bypass leitet die wärmere Abluft am Wärmeübertrager vorbei und direkt nach außen. Derartige innen aufgestellten Kombigeräte können bislang nicht mit explosiven Arbeitsfluiden betreiben werden.

Bei Frost reduziert die Frostschutzfunktion bedarfsabhängig den Zuluftvolumenstrom, was zu einer Anhebung der Fortlufttemperatur führt. Dadurch wird ein Vereisen des Wärmeübertragers verhindert. Wenn die Reduktion des Zuluftvolumenstroms nicht mehr ausreicht, dann schaltet das Kombigerät ab. Der Feuchtefühler erfasst die aktuelle Feuchtigkeit der Abluft. Wenn der Automodus eingestellt ist, dann wird der aktuelle Luftvolumenstrom bedarfsabhängig reguliert. Im Winter kann die Raumluftfeuchtigkeit als trocken empfunden werden. Ein optionaler Enthalpie-Wärmeübertrager, also ein Wärmeübertrager mit Feuchterückgewinnung, wirkt dem entgegen.

Es ist auch bekannt, entzündliche und explosive Arbeitsfluide im Falle von Leckagen einfach ins Freie abzulassen. So erklärt die "Bundesfachschule Kälte Klima Technik" im Mai 2012, der Einfluss auf die globale Erderwärmung bei R290 sei sehr gering, daher sei das Ablassen in die Atmosphäre die bisher übliche Vorgehensweise, um dieses Kältemittel zu entsorgen. Es seien aber gewisse Sicherheitsvorkehrungen zu treffen, die das Auftreten einer explosionsfähigen Atmosphäre weitestgehend minimierten.

Die DE 696 22 294 T2 beschreibt eine Klimaanlage mit Wärmepumpenfunktion, die mit Propan als Kältemittel betrieben wird, jedoch ohne Belüftungsfunktion. Ähnlich bekannter Splitgeräte besitzt sie einen Gehäuseteil mit einer Wärmeabgabefunktion und einen Gehäuseteil mit Wärmeaufnahmefunktion, ferner einen gekapselten Bereich für die Elektronik. Die verwendeten Wärmetauscher werden mit dem Kältemittel auf der einen Seite und mit Luft auf der anderen Seite betrieben, die Luft wird mit Gebläsen durch die Wärmetauscher gefördert. Beide Gehäuseteile sowie das gekapselte Elektronikgehäuse können innerhalb eines gemeinsamen Gehäuses oder getrennt voneinander aufgestellt werden, sie besitzen zueinander und nach außen hin Öffnungen. Ein geschlossenes Gehäuse, welches alle kältemittelführenden Einrichtungen, also auch alle kältemittelführenden Wärmetauscher vollständig umfasst, lehrt die DE 696 22 294 T2 jedoch nicht.

Die US 4 655 278 A beschreibt ein Belüftungsgerät mit Wärmepumpenfunktion, bei dem ein Gebäude gleichzeitig belüftet und klimatisiert werden kann. Bei der Klimatisierung wird die Abwärme zum Erwärmen von Warmwasser verwendet, Wärme von aus dem Gebäude ausströmender und in das Gebäude hineinströmender Luft wird über Wärmetauscher zurückgewonnen. Als Kältemittel wird jedoch Freon verwendet, was Sicherheitseinrichtungen bezüglich des Kältemittels entbehrlich macht. Deshalb spielt es keine Rolle, inwiefern das Belüftungsgerät entzündliche Gase nach Leckagen sicher abzuleiten imstande ist. Folglich ist auch kein geschlossenes Gehäuse vorgesehen, welches alle kältemittelführenden Einrichtungen enthält.

Die Aufgabe der Erfindung ist daher, eine Vorrichtung und ein Verfahren für eine sichere und effiziente Spülung eines Gehäuses für eine Wärmepumpe bereitzustellen, das in einem Wohngebäude aufgestellt ist, und in dessen Inneren ein linksdrehender thermodynamischer Kreisprozesses in einem geschlossenen, hermetisch dichten Arbeitsfluidumlauf mittels eines Arbeitsfluids durchgeführt wird.

Die Erfindung löst diese Aufgabe mittels einer innerhalb eines Gebäudes aufgestellten Luft-Wasser-Wärmepumpe zur sicheren Durchführung eines linksdrehenden thermodynamischen Kreisprozesses mittels eines gefährlichen Arbeitsfluids, welches in einem geschlossenen, hermetisch dichten Arbeitsfluidumlauf geführt wird, aufweisend
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen für Wärmeüberträgerfluide,
- ein geschlossenes Wärmepumpengehäuse, welches alle am geschlossenen Arbeitsfluidumlauf angeschlossenen Einrichtungen umfasst,
- Leitungen zur Zuführung von Luft aus der Umwelt außerhalb des Gebäudes, und
- Leitungen zur Ableitung von Luft an die Umwelt außerhalb des Gebäudes,
- einen Lüfter zur Förderung der Außenluft an einen der beiden Wärmeübertrager durch die Leitungen zur Zuführung und zur Ableitung von Luft aus der und an die Umwelt,
- wobei mindestens ein Abzweig zu den Leitungen zur Zuführung von Luft aus der Umwelt außerhalb des Gebäudes und den Leitungen zur Ableitung von Luft an die Umwelt außerhalb des Gebäudes vorgesehen wird, und
- mindestens eine weitere Öffnung zum Wärmepumpengehäuse vorgesehen wird,
- der Abzweig zu den Leitungen zur Zuführung von Luft aus der Umwelt außerhalb des Gebäudes und den Leitungen zur Ableitung von Luft an die Umwelt außerhalb des Gebäudes absperrbar mit dem geschlossenen Wärmepumpengehäuse verbunden ist,
- eine Belüftungsvorrichtung des Gebäudes vorgesehen ist, wobei von aus der Umwelt angesaugter Außenluft ein Abzweig zur Konditionierung der Außenluft durch die Wärmepumpe für das Gebäude eingerichtet ist, Verteileinrichtungen der konditionierten Außenluft im Gebäude vorgesehen werden, Abzugsvorrichtungen für die verbrauchte Luft aus dem Gebäude und Leitungen zur Wärmepumpe vorgesehen werden und die Wärme der aus dem Gebäude herausgeführten Fortluft für Heiz- oder Kühlzwecke mittels Wärmeübertragern genutzt wird,
- und ein Luftkanal vorgesehen ist, der die Öffnungen oder deren Leitungen zur Zuführung und Ableitung von Luft aus der Umwelt und dem Gebäude verbindet und der einen Wärmeübertrager der beiden Wärmeübertrager der Wärmepumpe und den Lüfter enthält.

Der Abzweig zu den Leitungen zur Zuführung von Luft aus der Umwelt außerhalb des Gebäudes und den Leitungen zur Ableitung von Luft an die Umwelt außerhalb des Gebäudes ist eine Ableitung von Spülluft aus dem Wärmepumpengehäuse, die weitere Öffnung zum Wärmepumpengehäuse ist dabei die Zuleitung hierfür. Hierbei versteht sich von selbst, dass die Einrichtungen größtenteils explosionsgeschützt ausgeführt und entsprechende Überwachungseinrichtungen vorgesehen werden müssen.

Die weitere Öffnung zum Wärmepumpengehäuse kann auch aus einer Vielzahl kleiner Öffnungen, Spalte oder Gitter bestehen, wobei wichtig ist, dass sie nicht zugestellt werden kann. Diese weitere Öffnung ist so zu dimensionieren, dass ein Luftstrom einströmen kann, der bis zu fünf Prozent des Luftstroms entspricht, der vom Lüfter durch den Wärmeübertrager geführt wird, gleichzeitig aber so, dass keine Luft ausströmen kann. Durch die Öffnung zum Luftkanal bewirkt der Lüfter, dass ein kleiner Luftstrom durch das Wärmepumpengehäuse gezogen wird, der es ständig spült.

Weiterhin sind vorgesehen, dass der Abzweig zu den Leitungen zur Zuführung von Luft aus der Umwelt außerhalb des Gebäudes und den Leitungen zur Ableitung von Luft an die Umwelt außerhalb des Gebäudes durch ein Federrückschlagventil oder ein Membranrückschlagventil absperrbar mit dem geschlossenen Wärmepumpengehäuse verbunden ist,

Weiterhin ist vorgesehen, dass innerhalb des geschlossenen Wärmepumpengehäuse mindestens ein weiteres Kapselgehäuse, welches einen Verdichter für Arbeitsfluid, eine Entspannungseinrichtung für Arbeitsfluid und mindestens einen der Wärmeübertrager einhaust. In diesem Kapselgehäuse werden ebenfalls eine Zuführöffnung und eine Abführöffnung für Spülluft vorgesehen, jeweils mit zugehöriger Leitung. Die zugehörige Leitung kann in einem Sonderfall auch aus einem direkten Anschluss bestehen, wenn das Kapselgehäuse entsprechend baulich so ausgeführt ist, dass es direkt an das geschlossene Wärmepumpengehäuse und/oder an den Luftkanal anschließt.

Wie auch für die Zu- und Abführleitungen des Wärmepumpengehäuses sind auch entsprechende Öffnungen und Leitungen für Spülluft im Kapselgehäuse vorzusehen, die entweder direkt an den Luftkanal oder am umgebenen Wärmepumpengehäuse anzuschließen sind. Für deren Absperrbarkeit gilt das gleiche wie oben. In weitern Ausgestaltungen ist daher vorgesehen, dass
- die Spülluftzugabeöffnung mit Leitung in das Kapselgehäuse als zweiter Abzweig aus den Leitungen zur Zuführung von Luft aus der Umwelt außerhalb des Gebäudes und den Leitungen zur Ableitung von Luft an die Umwelt außerhalb des Gebäudes vorgesehen wird
- die Spülluftzugabeöffnung mit Leitung zum weiteren Kapselgehäuse absperrbar ist, vorzugsweise durch ein Federrückschlagventil oder ein Membranrückschlagventil.

In einer weiteren Ausgestaltung wird vorgesehen, dass die absperrbaren Öffnungen oder deren Leitungen durch ein Sensorsignal mittels motorisch betriebener Klappen oder Ventile geöffnet oder geschlossen werden. Ein solches Sensorsignal kann beispielsweise einer Leckageerkennung entstammen.

Falls die Anordnung des Lüfters hierfür ungünstig ist, etwa weil die Einbindung druckseitig des Lüfters erfolgt, kann ein kleines, explosionsgeschütztes Fördergebläse zum Ausgang des Wärmepumpengehäuse in den Luftkanal oder an einer anderen Stelle des vorgesehenen Strömungsweges vorgesehen werden, welches typischerweise 50-100 Kubikmeter pro Stunde liefert, wobei dieser weniger als ein Viertel des maximalen Luftstroms für den Wärmepumpenbetrieb beträgt. Diese Einbindung hat den Vorteil, dass das Fördergebläse nicht auch explosionsgeschützt ausgeführt werden muss, da mögliche, leckagebedingte Kontamination mit entzündlichen Stoffen nur auf der Abströmseite des Lüfters möglich ist.

Wie auch die Leitungen kann in einer Ausgestaltung vorgesehen werden, dass das Fördergebläse durch ein Sensorsignal betätigt wird. Zur Sicherstellung einer Funktion auch bei Stromausfall verfügt dieses Fördergebläse über eine batterie- oder akkumulatorgestützte Notenergieversorgung, die im Falle eines Stromausfalls automatisch eingeschaltet werden kann oder sich dann selbsttätig einschaltet. Eine derartige Notversorgung kann auch für den Lüfter vorgesehen werden, damit eine Notbelüftung sichergestellt wird, wenn es zu einem Stromausfall kommt.

Ausgestaltungen der Erfindung betreffen die Position des Lüfters gegenüber dem Abzweig des geschlossenen Wärmepumpengehäuses. Dieser Abzweig kann entweder auf der Saugseite oder auf der Druckseite des Lüfters angeordnet werden. Sofern er auf der Saugseite angeordnet wird, muss eine Zuluft in das Wärmepumpengehäuse vorgesehen werden, damit Luft von außen nachströmen kann. Der Lüfter muss in diesem Fall explosionsgeschützt ausgeführt werden, da es im Leckagefall kontaminierte Luft fördert.

Erfindungsgemäß wird eine Belüftungsvorrichtung des Gebäudes vorgesehen, wobei von aus der Umwelt angesaugter Außenluft ein Abzweig zur Konditionierung der Außenluft durch die Wärmepumpe für das Gebäude eingerichtet ist, Verteileinrichtungen der konditionierten Außenluft im Gebäude vorgesehen werden, Abzugsvorrichtungen für die verbrauchte Luft aus dem Gebäude und Leitungen zur Wärmepumpe vorgesehen werden und die Wärme der aus dem Gebäude herausgeführten Fortluft für Heiz- oder Kühlzwecke mittels Wärmeübertragern genutzt wird.

Die Funktionsweise der Erfindung ist, dass eine Wärmepumpe, die auch als Klimaanlage betreibbar ist, und die als Luft-Wasser-Wärmepumpe dauerhaft mit einem Luftstrom beaufschlagt wird, diese Luft sowohl zur Verdünnung eventueller leckagebedingter Arbeitsfluide als auch zur Belüftung des Gebäudeinnenraums nutzen kann. Es ist dabei lediglich darauf zu achten, dass die leckagebedingt kontaminierte Luft mit einer großen Menge Fort- bzw. Abluft vermischt aus dem Gebäude geleitet wird, während gleichzeitig Außenluft in das Gebäude nachströmt.

Gemäß der Erfindung ist daher vorgesehen, dass ein Luftkanal vorgesehen ist, der alle Leitungen zur Zuführung und Ableitung von Luft aus der Umwelt und dem Gebäude verbindet sowie einen Wärmeübertrager der Wärmepumpe und den Lüfter enthält. Hierbei kann vorgesehen werden, dass die abführenden Leitungen des Luftkanals in Strömungsrichtung vor den zuführenden Leitungen angeschlossen sind, der Wärmeübertrager im Luftkanal zwischen den abführenden und den zuführenden Leitungen angeordnet ist und dass vor oder nach dem Wärmeübertrager mindestens eine Drosselklappe vorgesehen ist, vorzugsweise sind dies Jalousieklappen.

Es kann auch vorgesehen werden, dass der Lüfter im Luftkanal zwischen den abführenden und den zuführenden Leitungen angeordnet ist. Die Druckdifferenz des Lüfters ist damit die antreibende Kraft des Spülstroms durch das Wärmepumpengehäuse. Hierbei muss im Leckagefall darauf geachtet werden, dass auf der Druckseite des Lüfters keine kontaminierte Luft in das Wärmepumpengehäuse zurückgeführt wird. Im allgemeinen wird dies aber dadurch minimiert, dass der Spülstrom hinter dem Fördergebläse um mehr als den Faktor Hundert verdünnt ist und somit eine Zirkulation des Kontaminats schon von daher unterbleibt.

Ferner ist natürlich zu verhindern, dass mit Arbeitsfluid kontaminierte Luft in das Gebäude gelangen kann und das Abluft aus dem Gebäude als Spülluft in das Wärmepumpengehäuse gerät.

In Ausgestaltungen wird daher vorgesehen, dass die in das Wärmepumpengehäuse aus dem Luftkanal abführenden Leitungen in Strömungsrichtung vor den in den Luftkanal zuführenden Leitungen angeschlossen sind. Insbesondere kann vorgesehen werden, dass die in das Wärmepumpengehäuse aus dem Luftkanal abführende Leitung druckseitig hinter dem Lüfter und die aus dem Wärmepumpengehäuse in den Luftkanal hineinführende Leitung saugseitig vor dem Lüfter angeschlossen sind und/oder der Wärmeübertrager im Luftkanal zwischen den abführenden und den zuführenden Leitungen angeordnet ist und/oder der Lüfter im Luftkanal zwischen den abführenden und den zuführenden Leitungen angeordnet ist.

Um gelegentliche Vereisungen zu unterbinden wie auch bei Betriebsunterbrechungen ist es sinnvoll, den im Luftkanal angeordneten Wärmeübertrager und/oder den Lüfter mit Drosselklappen zu kapseln, die regelbar ausgeführt sein können und sich damit auch in die Lage zu versetzen, durch Anstellung dieser Drosselklappen die Druckdifferenz zu beeinflussen, die für die Spülströme wirksam ist. Vorzugsweise werden hierfür Jalousieklappen verwendet.

Hierbei sind vorzugsweise sowohl vor als auch hinter dem im Luftkanal angeordneten Wärmeübertrager jeweils eine Drosselklappe vorzusehen, die wie alle anderen Absperrorgane motorisch stellbar sind. Ferner soll vorgesehen werden, dass die Drosselklappen und alle anderen Ventile und Klappen über eine Einrichtung zur Konstantvolumenstromregelung verfügen.

Mit einer solchen Vorrichtung, wie sie vorangehend beschrieben worden ist, lässt sich im Leckagefall das ansonsten entzündliche Arbeitsfluid in sehr verdünnter Weise so abführen, dass die Zündgrenzen sicher unterschritten bleiben. Die Vorrichtung erlaubt ein solches verdünnendes Fortleiten aber auch dann, wenn die Luft-Wasser-Wärmepumpe nicht in Betrieb ist, oder wenn sie sich während des Winterbetriebs im Abtaumodus befindet.

In einem Verfahren zum Betrieb der Luft-Wasser-Wärmepumpe ist vorgesehen, dass der Lüfter zur Förderung der Außenluft an einen der beiden Wärmeübertrager durch die Leitungen zur Zuführung und zur Ableitung von Luft aus der und an die Umwelt mit einer Mindestdrehzahl betrieben wird bzw. einen Mindestvolumenstrom liefert, wenn der Kreisprozess der Wärmepumpe außer Betrieb ist. Hierdurch werden auch Leckagen, die sich während des Stillstands ereignen, sicher behandelt. Für diesen Fall ist auch ein Notstrombetrieb für die angeschlossenen Lüfter und Absperrorgane sinnvoll durchzuführen, sofern der Stillstand auf einen Stromausfall zurückzuführen ist.

Sofern die Luft-Wasser-Wärmepumpe mit einer Abtauvorrichtung für den Winterbetrieb ausgestattet ist, ist in einer erfinderischen Ausgestaltung des Verfahrens vorgesehen, dass die Absperrklappen, die den als Verdampfer eingesetzten Wärmeübertrager im Luftkanal drosseln oder absperren, in besonderer Weise eingesetzt werden. Diese sperren die Luftströmung durch diesen Wärmeübertrager vollständig ab, und die Mindestströmung wird vollständig durch das Wärmepumpengehäuse und das Kapselgehäuse umgeleitet. Sollte während dieses Abtaubetriebs eine Leckage auftreten, findet automatisch auch eine Spülung statt, sollte die Leckage auch den Wärmeübertrager im Luftkanal betreffen, können die Klappen geöffnet werden und das entzündliche Arbeitsfluid wird sicher abgeführt.

Als Arbeitsfluide scheiden die bekannten Sicherheitskältemittel wegen ihrer Klimaschädlichkeit aus, alle anderen bekannten Arbeitsfluide sind gefährlich, was vor allem aufgrund der Aufstellung innerhalb eines Wohngebäudes zwar der Aufmerksamkeit bedarf, andererseits aber insoweit unkritisch ist, als die meisten entzündlichen Arbeitsfluide als herkömmliche Brennstoffe bekannt sind und deren Verhalten normalerweise unproblematisch ist. Für die erfindungsgemäße Luft-Wasser-Wärmepumpe wird dabei als Arbeitsfluid vorzugsweise eines verwendet, bei dem es sich um ein in Verbindung mit Luft entzündliches oder explosives Arbeitsfluid handelt, wobei dieses Arbeitsfluid vorzugsweise Propan enthält, insbesondere es sich um das Kältemittel R290 handelt.

Die Erfindung wird nachfolgend anhand von Beispielen näher erläutert. Dabei zeigen die Fig. 1 bis Fig. 9 schematisch
Fig. 1: ein Wohngebäude mit einem Kombigerät,
Fig. 2: eine erste Anordnung einer Einbindung eines Kombigeräts
Fig. 3: eine zweite Anordnung einer Einbindung eines Kombigeräts,
Fig. 4: eine dritte Anordnung einer Einbindung eines Kombigeräts mit einer Kapselung,
Fig. 5: eine vierte Anordnung einer Einbindung eines Kombigeräts mit einer Kapselung,
Fig. 6: eine fünfte Anordnung einer Einbindung eines Kombigeräts mit einer Kapselung,
Fig. 7: eine sechste Anordnung einer Einbindung eines Kombigeräts mit einer Kapselung,
Fig. 8: eine siebte Anordnung einer Einbindung eines Kombigeräts mit einer Kapselung,
Fig. 9: eine achte Anordnung einer Einbindung eines Kombigeräts mit einer Kapselung.

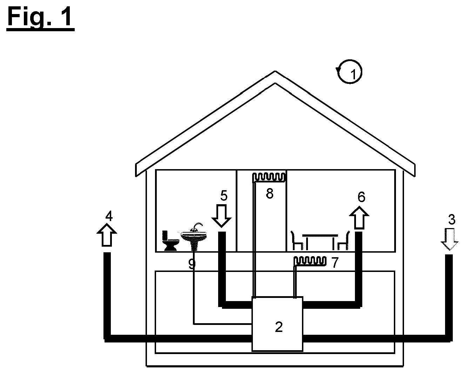

Fig. 1 zeigt ein Wohngebäude 1, welches mit einer Belüftung und einer Wärmepumpe 2, die auch als Klimaanlage und als Heißwassergerät genutzt werden kann, ausgestattet ist, solche Kombigeräte sind im Stand der Technik bekannt.

Im Heizbetrieb nutzt die Wärmepumpe im Wärmepumpengehäuse 2 die Außenluft 3 als Wärmequelle, die sie abgekühlt als Fortluft 4 wieder an die Umwelt abgibt. Die Wärmepumpe nutzt zusätzlich teilweise die Abluft 5 aus dem Wohnbereich als Wärmequelle. Im Heizbetrieb wird dabei Wärmeenergie von der Umwelt aufgenommen und an das Gebäude 1 abgegeben. Im Kühlbetrieb wird Wärmeenergie aus dem Gebäude 1 aufgenommen und an die Umwelt abgegeben, die Abluft 5 wird dabei als Wärmesenke genutzt.

Das Lüftungsgerät ist zusammen mit der Wärmepumpe 2 als Kombigerät der zentrale Bestandteil einer kontrollierten Wohnraumlüftung. Verbrauchte Luft aus Küche, Bad und WC wird als Abluft 5 abgeführt. Die gleiche Luftmenge frischer Luft wird als Zuluft 6 den Wohn- und Schlafräumen zugeführt. Die Zuluft 6 wird dabei entsprechend den Wünschen der Bewohner konditioniert, dies betrifft Temperatur und Feuchte sowie ggf. die Entfernung von Schadstoffen. Die Wärmepumpe 2 verfügt über einen Anschluss an einen Heizkreislauf, in diesem Beispiel an eine Fußbodenheizung 7, sowie einen Anschluss an einen Kühlkreislauf, in diesem Beispiel an eine Kühldecke 8. Es sind jedoch viele weitere Nutzungsmöglichkeiten vorhanden, nicht gezeigt ist ferner die Warmwasserbereitung, die üblichem Stand der Technik entspricht.

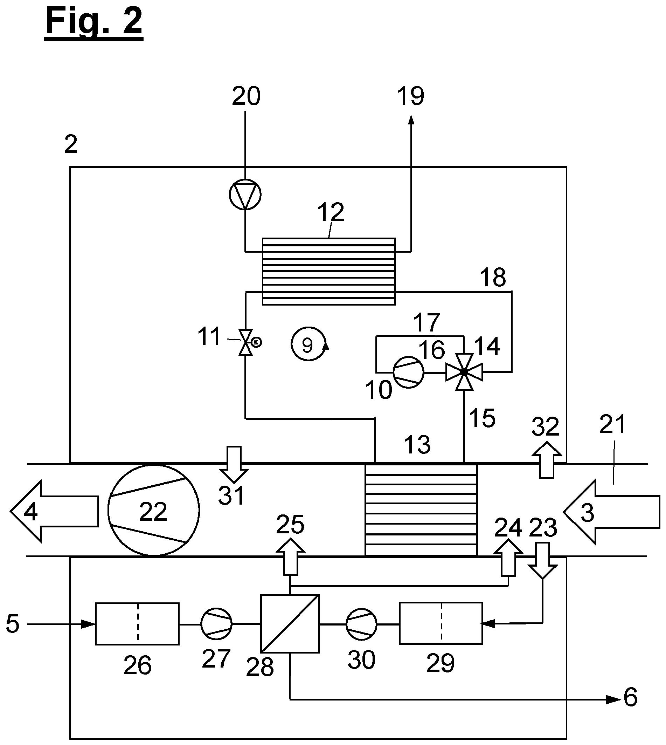

Fig. 2 zeigt die Einbindung eines solchen Kombigeräts in die Sicherheitsentlüftung, wobei die Einbindung auf der Saugseite des Gebläses erfolgt. Hierbei zeigt Fig. 2 ein Wärmepumpengehäuse 2 mit Wärmepumpe aus dem Arbeitsfluidumlauf 9, einem Verdichter 10, einem Expansionsventil 11, sowie zwei Wärmeübertragern 12 und 13. Während des Heizbetriebs dient der Wärmeübertrager 12 als Kondensator, während des Kühlbetriebs als Verdampfer. Umgekehrt dient der Wärmeübertrager 13 während des Kühlbetriebs als Kondensator und während des Heizbetriebs als Verdampfer. Trotzdem sind die beiden Wärmeübertrager normalerweise nicht identisch, da der eine Wärme gegen Luft und der andere gegen Wasser als Medium überträgt.

Zur Umschaltung des Arbeitsfluidumlaufs 9 dient das 4-Wege-Ventil 14, welches so gestaltet ist, dass immer je zwei Wege miteinander verbunden sind. Im Heizbetrieb werden die Verbindungsleitungen 15 und 16 miteinander verbunden, so dass das Arbeitsfluid vom Wärmeübertrager 13, der als Verdampfer arbeitet, zum Verdichter 10 strömt. Vom Verdichter 10 kommend werden die Verbindungsleitungen 17 und 18 verbunden, die zum Wärmeübertrager 12, der als Kondensator arbeitet, geleitet. Im Kühlbetrieb werden die Verbindungsleitungen 16 und 18 miteinander verbunden, so dass das Arbeitsfluid vom Wärmeübertrager 12, der als Verdampfer arbeitet, zum Verdichter 10 strömt. Vom Verdichter 10 kommend werden die Verbindungsleitungen 17 und 15 verbunden, die zum Wärmeübertrager 13, der als Kondensator arbeitet, geleitet. Die Wärmeträgeranschlüsse 19 und 20 des Wärmeübertragers 12 dienen je nach Betriebsfall als Heizmedium oder als Kühlmedium.

Die Außenluft 3 wird in den Luftkanal 21 eingeleitet. Im Luftkanal 21, der nach herkömmlichem Stand der Technik üblicherweise oberhalb des Kombigeräts angeordnet ist, befinden sich der Wärmeübertrager 13, der je nach Betriebsfall als Kondensator oder als Verdampfer wirkt, und der Lüfter 22, der die Luft als Wärmeträger durch den Wärmeübertrager 13 fördert. Aus dem Luftkanal 21 werden normalerweise die Zuluft 6 für die Außenluftversorgung des Wohnbereichs in einer Zuluftabzweigung 23 abgezweigt und die Abluft 5 aus Bädern und Küche in einer Ablufteinleitung 24 bzw. 25 hineingeleitet.

Die Einleitung der Abluft 5 erfolgt jedoch erst, nachdem sie in einem Filter 26 gereinigt wird und sie von dem Fördergebläse 27 über den Wärmeübertrager 28 über die Abluftleitung 24 im Falle des Heizbetriebs der Wärmepumpe oder die Abluftleitung 25 im Falle des Kühlbetriebs geführt wurde. Die Zuluftabzweigung 23 wird parallel über den Filter 29 geführt und von dem Fördergebläse 30 in den Wärmeübertrager 28 geführt. Danach können noch weitere Konditionierungen der Zuluft 6 nach bekanntem Stand der Technik folgen, bevor die Zuluft 6 in das Wohngebäude 1 geleitet wird.

Falls Leckagen im Arbeitsfluidumlauf auftreten sollten, ist eine Ableitung 31 in den Luftkanal 21 vorgesehen. Diese Ableitung 31 ist vorzugsweise eine Klappe mit Rückschlagsicherung, die auf ein Signal hin automatisch geöffnet wird. Gleichzeitig wird eine Zuleitung 32 vorgesehen, die ebenfalls vorzugsweise eine Klappe mit Rückschlagsicherung ist, die automatisch geöffnet wird. Sofern aufgrund der Leckage ein Überdruck im Wärmepumpengehäuse 2 entstanden ist, öffnet nur die Ableitung 31, die saugseitig vor dem Lüfter 22 platziert ist. Sofern kein Überdruck aufgrund der Leckage entstanden ist, was bei kleinen Leckagen der Fall ist, öffnen Ableitung 31 und Zuleitung 32 gleichzeitig, wodurch sich ein Spüleffekt ergibt. Dieser Spüleffekt wird angetrieben durch die luftseitige Druckdifferenz des Wärmeübertragers 13.

Im Gegensatz zum Stand der Technik ist es vorteilhaft, den Lüftungskanal unterhalb der Wärmepumpe anzuordnen, da manche brennbaren Arbeitsfluide, wie z.B. R290, schwerer als Luft sind und daher tendenziell zum Behälterboden sinken. Die Ableitung 31 und die Zuleitung 32 münden daher vom Behälterboden direkt in den Luftkanal 21.

Bezüglich des Lüftungsgeräts ist dieses in Fig. 2 zwar unterhalb des Luftkanals 21 gezeichnet, es kann aber ebenso gut parallel neben dem Luftkanal 21 oder über ihm angeordnet werden. Sofern die Ableitung 31 und die Zuleitung 32 automatisch geöffnet werden, sollte das Belüftungsgerät mit den Fördergebläsen 27 und 30 abgeschaltet werden.

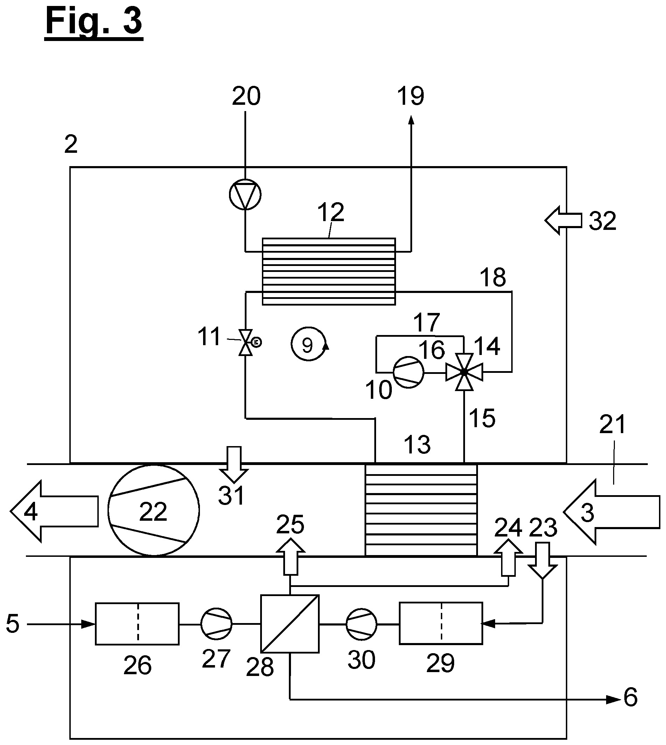

Fig. 3 zeigt eine Anordnung, bei der die Zuleitung 32 nicht aus dem Luftkanal 21, sondern aus dem Gebäude 1 erfolgt. Dies wird dadurch bewirkt, dass Lüftungsöffnungen mit definierten Öffnungsquerschnitten vorgesehen werden. Diese werden derart dimensioniert, dass der Lüfter 22 einen solchen Unterdruck gegenüber dem Gebäudeinneren erzeugt, dass ständig ein kleiner Spülstrom durch das Wärmepumpengehäuse 2 gezogen wird.

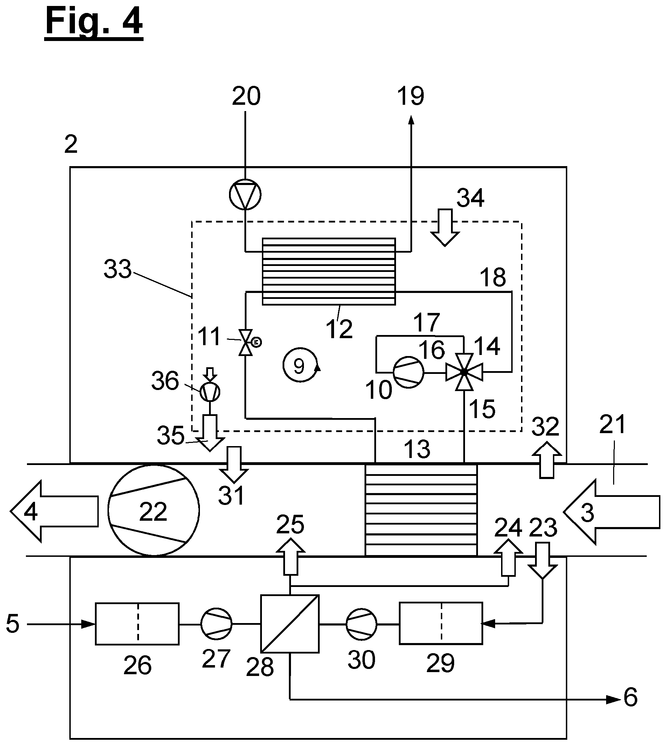

Fig. 4 zeigt eine Anordnung, bei der der Verdichter 10, das Entspannungsventil 11, das 4-Wege-Ventil 14 und optional weitere Teile in einem separaten Kapselgehäuse 33 eingekapselt sind. Solche Anordnungen sind üblich, um die Geräusche der Wärmepumpe zu dämmen. Diese Kapselung wird zur Strömungsführung der Spülluft eingesetzt, indem im oberen Bereich des Kapselgehäuses eine Spülluftzugabeöffnung 34 mit Leitung vorgesehen wird, in die die Spülluft aus dem Wärmepumpengehäuse 2 entnommen und eingeleitet wird, und am Boden des Kapselgehäuses 33 durch eine Spülluftabgabeöffnung 35 mit Leitung wieder entnommen wird. Das Einleiten oder das Entnehmen dieser Spülluft wird durch ein kleines Fördergebläse 36 unterstützt, welches saugseitig an der Spülluftabgabeöffnung 35 mit Leitung sitzt und ein Fördervolumen von 50 bis 100 m³/h hat, das entspricht der Größenordnung eines PC-Lüfters. Die Anordnung mit Einleitung oben und Entnahme unten ist dabei nur beispielhaft gewählt, alle anderen Anordnungen sind ebenfalls möglich.

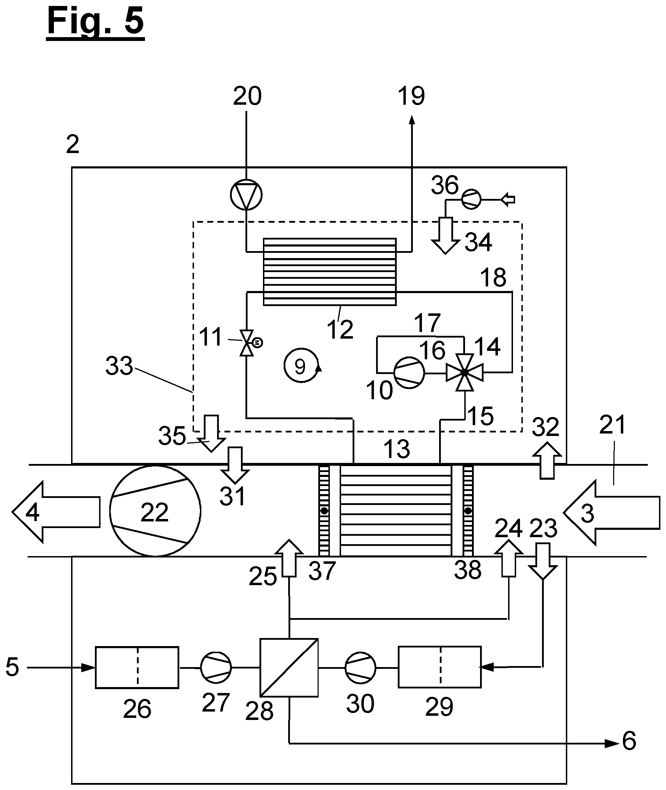

Fig. 5 zeigt eine weitere Anordnung, bei der der Verdichter 10, das Entspannungsventil 11, das 4-Wege-Ventil 14 und optional weitere Teile in einem separaten Kapselgehäuse 33 eingekapselt sind. Das Einleiten oder das Entnehmen der Spülluft wird durch ein kleines Fördergebläse 36 unterstützt, welches druckseitig an der Spülluftzugabeöffnung 34 mit Leitung sitzt und ein Fördervolumen von 50 bis 100 m³/h hat. Der Lüfter 22 wird eingeschlossen von zwei Drosselklappen 37 und 38, die als Jalousieklappen ausgeführt sind. Hiermit lässt sich der Druckverlust am Wärmeübertrager 13 erhöhen, wenn das Wärmepumpengehäuse mit mehr Luft gespült werden soll. Die Jalousieklappen können auch bei der Enteisung oder zum Schutz bei längeren Betriebspausen eingesetzt werden.

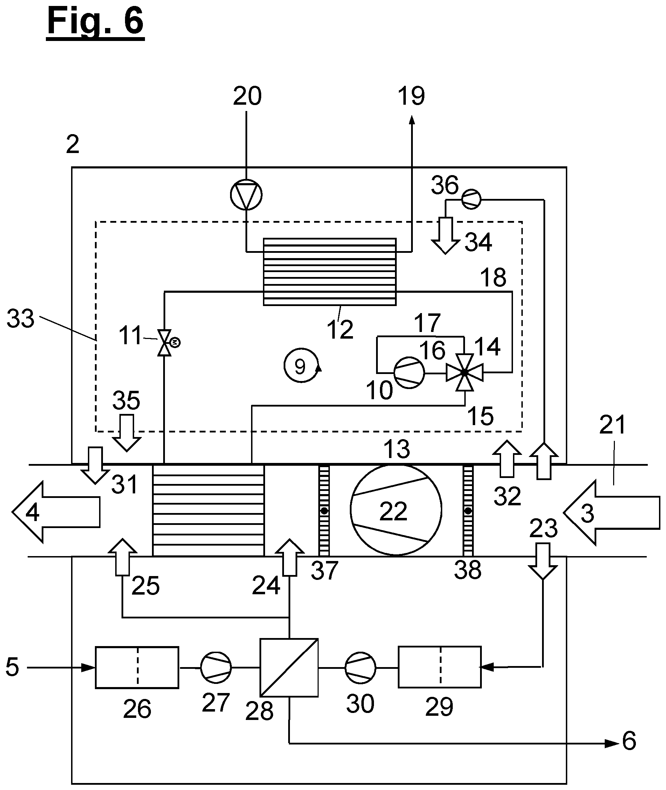

Fig. 6 zeigt eine weitere Anordnung, bei der der Verdichter 10, das Entspannungsventil 11, das 4-Wege-Ventil 14 und optional weitere Teile in einem separaten Kapselgehäuse 33 eingekapselt sind. Das Einleiten oder das Entnehmen der Spülluft wird durch ein kleines Fördergebläse 36 unterstützt, welches druckseitig an der Spülluftzugabeöffnung 34 mit Leitung sitzt, ein Fördervolumen von 50 bis 100 m³/h hat, und Luft aus dem Luftkanal 21 über die Zuleitung 32 ansaugt. Der Lüfter 22 wird eingeschlossen von zwei Drosselklappen 37 und 38, die als Jalousieklappen ausgeführt sind. Hiermit lässt sich der Druckverlust am Lüfter 22 erhöhen, wenn das Wärmepumpengehäuse mit mehr Luft gespült werden soll.

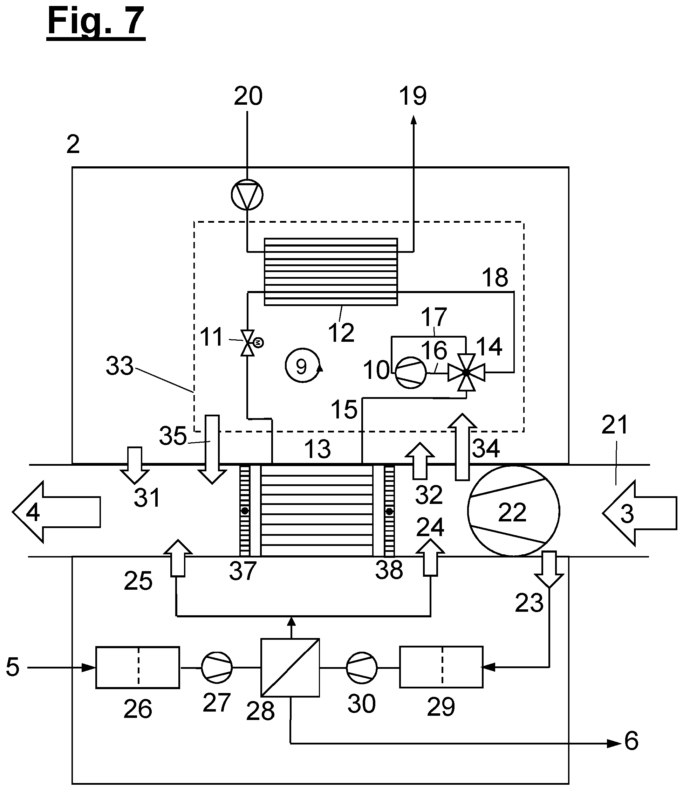

Fig. 7 zeigt eine weitere Anordnung, bei der der Verdichter 10, das Entspannungsventil 11, das 4-Wege-Ventil 14 und optional weitere Teile in einem separaten Kapselgehäuse 33 eingekapselt sind und der Lüfter 22 aber druckseitig zum Wärmeübertrager 13 platziert ist. Gezeigt wird ferner, dass die Spülluft für das Kapselgehäuse 33 auch direkt dem Luftkanal 21 hinter dem Lüfter 22 entnommen und anschließend direkt hinter dem Wärmeübertrager 13 wieder dem Luftkanal 21 zugeführt werden kann. Die in den Fig. 3 bis 5 gezeigten Varianten sind bezüglich der Spülluftanschlüsse austauschbar.

Die druckseitige Anordnung des Lüfters 22 hat gegenüber der saugseitigen Anordnung den Vorteil, dass auf Explosionsschutz verzichtet werden kann, allerdings bewirkt die druckseitige Anordnung, dass aufgrund der Belüftungsfunktion das gesamte Gebäude 1 auf diese Weise unter leichten Überdruck gesetzt werden kann. Das ist auch dann vorteilhaft, wenn im Gebäude 1 mit Gas gekocht wird, weil dann keine Sicherheitsabschaltungen hinsichtlich des Gasanschlusses vorgesehen werden müssen.

Die Anordnung der Drosselklappen 37 und 38 vor und hinter dem Wärmeübertrager 13 hat auch den Vorteil, dass die beiden Drosselklappen im Notbetrieb oder während eines Abtauvorgangs geschlossen werden können und der gesamte Spülstrom, den der Lüfter 22 erzeugt, der Spülung des Wärmepumpengehäuses 2 dient.

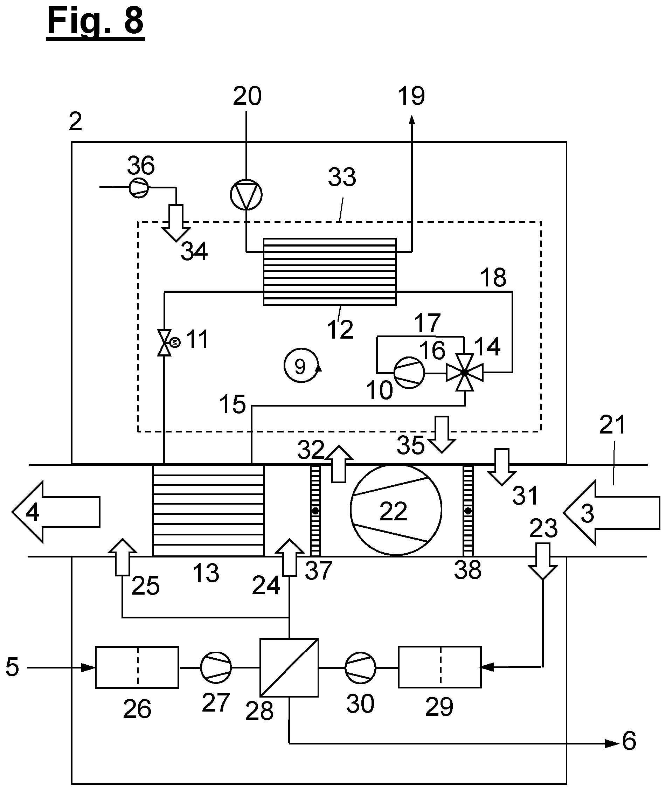

Fig. 8 zeigt eine weitere Anordnung, bei der die Zuleitung 32 zum Wärmepumpengehäuse 2 druckseitig des Lüfters 22 und die Ableitung 31 vom Wärmepumpengehäuse 2 saugseitig angeordnet sind. Eine Anreicherung von gefährlichem Arbeitsfluid im Fall einer Leckage ist deshalb nicht zu befürchten, da die der Spülstrom durch das Wärmepumpengehäuse 2 um mehr als den Faktor Hundert kleiner ist als die Luftmenge, die der Lüfter 22 nach außen fördert. Die Menge des Spülstroms ergibt sich in diesem Fall aus der Druckdifferenz, die der Lüfter 22 erzeugt, wobei diese Druckdifferenz durch Verstellung der Klappen 37 bzw. 38 auch erhöht werden kann. Bei einer solchen Strömungsführung der Spülluft ist sorgfältig darauf zu achten, dass weder kontaminierte Spülluft aus der Ableitung 31 in die Zuluftleitung 23, noch Gebäudeabluft über die Abluftleitungen 24 oder 25 und den Luftkanal 21 in die Zuleitung 32 gelangen können. Die Spülung des Kapselgehäuses 33 erfolgt dabei wie in Figur 5 beschrieben.

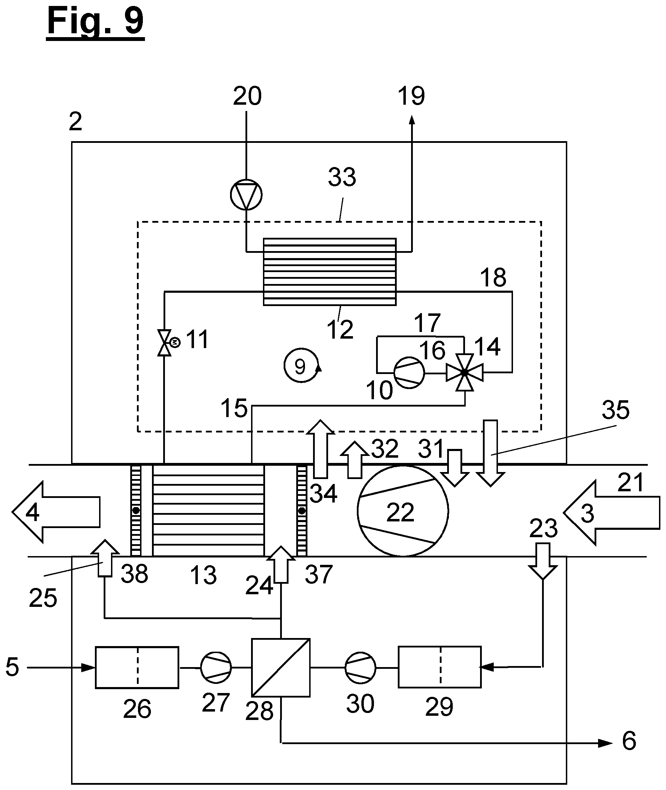

Fig. 9 zeigt eine weitere Anordnung, bei der ebenfalls die Zuleitung 32 zum Wärmepumpengehäuse 2 druckseitig des Lüfters 22 und die Ableitung 31 vom Wärmepumpengehäuse 2 saugseitig angeordnet sind. Im Unterschied zum in Fig. 8 beschriebenen Fall wird dabei die Spülluft für das Kapselgehäuse 33 direkt aus dem Luftkanal 21 mittels der Spülluftzugabeöffnung 34 mit Leitung, die mit dem Fördergebläse 36 verbunden ist, entnommen und über die Spülluftabgabeöffnung 35 mit Leitung unmittelbar vor den Lüfter 22 in den Luftkanal 21 zurückgeführt.

Natürlich kann der hier vereinfacht dargestellte Kältekreislauf auch mehrere Wärmeübertrager auf unterschiedlichen Temperaturniveaus, eine gestufte Druckreduzierung, sowie eine Vielzahl von Sensoren enthalten, wobei die Spüleinrichtungen aber grundsätzlich identisch sind.

### Bezugszeichenliste

- 1: Wohngebäude
- 2: Wärmepumpengehäuse
- 3: Außenluft
- 4: Fortluft
- 5: Abluft
- 6: Zuluft
- 7: Fußbodenheizung
- 8: Kühldecke
- 9: Arbeitsfluidumlauf
- 10: Verdichter
- 11: Expansionsventil
- 12: Wärmeübertrager
- 13: Wärmeübertrager
- 14: 4-Wege-Ventil
- 15: Verbindungsleitung
- 16: Verbindungsleitung
- 17: Verbindungsleitung
- 18: Verbindungsleitung
- 19: Wärmeträgeranschluss
- 20: Wärmeträgeranschluss
- 21: Luftkanal
- 22: Lüfter
- 23: Außenluftleitung
- 24: Fortluftleitung
- 25: Fortluftleitung
- 26: Filter
- 27: Fördergebläse
- 28: Wärmeübertrager
- 29: Filter
- 30: Fördergebläse
- 31: Ableitung
- 32: Zuleitung
- 33: Kapselgehäuse
- 34: Spülluftzugabeöffnung mit Leitung
- 35: Spülluftabgabeöffnung mit Leitung
- 36: Fördergebläse
- 37: Drosselklappe
- 38: Drosselklappe

## Patentansprüche

1. Luft-Wasser-Wärmepumpe zur sicheren Durchführung eines linksdrehenden thermodynamischen Kreisprozesses mittels eines gefährlichen Arbeitsfluids, welches in einem geschlossenen, hermetisch dichten Arbeitsfluidumlauf geführt wird und im Anwendungsfall in einem Gebäude (1) aufstellbar ist, aufweisend
- mindestens einen Verdichter (10) für Arbeitsfluid,
- mindestens eine Entspannungseinrichtung (11) für Arbeitsfluid,
- mindestens zwei Wärmeübertrager (12, 13) für Arbeitsfluid mit jeweils mindestens zwei Anschlüssen (19,20) für Wärmeüberträgerfluide,
- ein geschlossenes Wärmepumpengehäuse (2), welches alle am geschlossenen Arbeitsfluidumlauf angeschlossenen Einrichtungen umfasst,
- Leitungen zur Zuführung von Luft (3) aus der Umwelt außerhalb des Gebäudes (1),
- Leitungen zur Ableitung von Luft (4) an die Umwelt außerhalb des Gebäudes,
- einen Lüfter (22) zur Förderung der Außenluft an einen der beiden Wärmeübertrager (13) durch die Leitungen (21) zur Zuführung und zur Ableitung von Luft aus der und an die Umwelt, wobei
- mindestens ein Abzweig (31) zu den Leitungen zur Zuführung von Luft (3) aus der Umwelt außerhalb des Gebäudes (1) und den Leitungen zur Ableitung von Luft (4) an die Umwelt außerhalb des Gebäudes (1) vorgesehen wird,
- mindestens eine weitere Öffnung (32) zum Wärmepumpengehäuse (2) vorgesehen wird,
- der Abzweig (31) zu den Leitungen zur Zuführung von Luft (3) aus der Umwelt außerhalb des Gebäudes (1) und den Leitungen zur Ableitung von Luft (4) an die Umwelt außerhalb des Gebäudes (1) absperrbar mit dem geschlossenen Wärmepumpengehäuse (2) verbunden ist,
**dadurch gekennzeichnet, dass**
eine Belüftungsvorrichtung für das Gebäude (1) vorgesehen ist, wobei von aus der Umwelt angesaugter Außenluft (3) ein Abzweig (23) zur Konditionierung der Außenluft für das Gebäude (1) eingerichtet ist, Verteileinrichtungen der konditionierten Zuluft im Gebäude (1) vorgesehen werden, Abzugsvorrichtungen für die verbrauchte Fortluft (5) aus dem Gebäude (1) vorgesehen werden und die Wärme der aus dem Gebäude (1) herausgeführten Fortluft (25) für Heiz- oder Kühlzwecke mittels einem Wärmeübertrager (13) der zwei Wärmeübertrager (13, 12) nutzbar gemacht wird, und ein Luftkanal (21) vorgesehen ist, der die Öffnungen (23, 24, 25, 31, 32) 4 oder deren Leitungen zur Zuführung und Ableitung von Luft (3, 4) aus der Umwelt und dem Gebäude (1) verbindet und der einen Wärmeübertrager (13) der beiden Wärmeübertrager (12, 13) der Wärmepumpe und den Lüfter (22) enthält.

2. Luft-Wasser-Wärmepumpe nach Anspruch 1, **dadurch gekennzeichnet, dass** der Abzweig (31) zu den Leitungen zur Zuführung von Luft (3) aus der Umwelt außerhalb des Gebäudes (1) und den Leitungen zur Ableitung von Luft (4) an die Umwelt außerhalb des Gebäudes (1) durch ein Federrückschlagventil absperrbar mit dem geschlossenen Wärmepumpengehäuse (2) verbunden ist.

3. Luft-Wasser-Wärmepumpe nach Anspruch 1, **dadurch gekennzeichnet, dass** der Abzweig (31) zu den Leitungen zur Zuführung von Luft (3) aus der Umwelt außerhalb des Gebäudes (1) und den Leitungen zur Ableitung von Luft (4) an die Umwelt außerhalb des Gebäudes (1) durch ein Membranrückschlagventil absperrbar mit dem geschlossenen Wärmepumpengehäuse (2) verbunden ist.

4. Luft-Wasser-Wärmepumpe nach einem der Ansprüche 1 bis 3, **dadurch gekennzeichnet, dass** innerhalb des geschlossenen Wärmepumpengehäuse (2) mindestens ein weiteres Kapselgehäuse (33) vorgesehen wird, welches einen Verdichter (10) für Arbeitsfluid, eine Entspannungseinrichtung (11) für Arbeitsfluid und mindestens einen der Wärmeübertrager (12) einhaust, und welches eine Spülluftzugabeöffnung (34) mit Leitung und eine Spülluftabgabeöffnung (35) mit Leitung für Spülluft vorsieht.

5. Luft-Wasser-Wärmepumpe nach Anspruch 4, **dadurch gekennzeichnet, dass** die Spülluftzugabeöffnung (34) mit Leitung in das Kapselgehäuse (33) als zweiter Abzweig aus den Leitungen zur Zuführung von Luft (3) aus der Umwelt außerhalb des Gebäudes (1) und den Leitungen zur Ableitung von Luft (4) an die Umwelt außerhalb des Gebäudes (1) vorgesehen wird.

6. Luft-Wasser-Wärmepumpe nach Anspruch 4, **dadurch gekennzeichnet, dass** die Spülluftzugabeöffnung (34) mit Leitung zum weiteren Kapselgehäuse (33) absperrbar ist.

7. Luft-Wasser-Wärmepumpe nach Anspruch 6, **dadurch gekennzeichnet, dass** die Spülluftzugabeöffnung (34) mit Leitung zum weiteren Kapselgehäuse (33) durch ein Federrückschlagventil absperrbar ist.

8. Luft-Wasser-Wärmepumpe nach Anspruch 6, **dadurch gekennzeichnet, dass** die Spülluftzugabeöffnung (34) mit Leitung zum weiteren Kapselgehäuse (33) durch ein Membranrückschlagventil absperrbar ist.

9. Luft-Wasser-Wärmepumpe nach einem der Ansprüche 1 bis 8, **dadurch gekennzeichnet, dass** die absperrbaren Öffnungen (31, 32, 34, 35) oder deren Leitungen durch ein Sensorsignal mittels motorisch betriebener Klappen oder Ventile geöffnet oder geschlossen werden können.

10. Luft-Wasser-Wärmepumpe nach einem der Ansprüche 1 bis 9, **dadurch gekennzeichnet, dass** in einer der Öffnungen (31, 32, 34, 35) oder deren Leitungen ein weiteres Fördergebläse (36) vorgesehen wird.

11. Luft-Wasser-Wärmepumpe nach Anspruch 10, **dadurch gekennzeichnet, dass** das weitere Fördergebläse (36) durch ein Sensorsignal betätigbar ist.

12. Luft-Wasser-Wärmepumpe nach einem der Ansprüche 10 oder 11, **dadurch gekennzeichnet, dass der** Lüfter (22) zur Förderung der Außenluft an einen der beiden Wärmeübertrager (13) durch die Leitungen (21) zur Zuführung und zur Ableitung von Luft aus der und an die Umwelt und/oder das Fördergebläse (36) über je eine batterie- oder akkumulatorgestützte Notenergieversorgung verfügen, die im Falle eines Stromausfalls automatisch eingeschaltet werden kann.

13. Luft-Wasser-Wärmepumpe nach einem der Ansprüche 1 bis 12, **dadurch gekennzeichnet, dass** die in das Wärmepumpengehäuse (2) aus dem Luftkanal (21) abführenden Leitungen (23, 32) in Strömungsrichtung vor den in den Luftkanal (21) zuführenden Öffnungen oder Leitungen (24, 25, 31) angeschlossen sind.

14. Luft-Wasser-Wärmepumpe nach Anspruch 13, **dadurch gekennzeichnet, dass** die in das Wärmepumpengehäuse (2) aus dem Luftkanal (21) abführende Leitung (32) druckseitig hinter dem Lüfter (22) und die aus dem Wärmepumpengehäuse (2) in den Luftkanal (21) hineinführende Spülluftabgabeöffnung (35) mit Leitung saugseitig vor dem Lüfter (22) angeschlossen sind.

15. Luft-Wasser-Wärmepumpe nach Anspruch 14, **dadurch gekennzeichnet, dass** der Wärmeübertrager (13) im Luftkanal (21) zwischen den abführenden (23, 32) und den zuführenden Leitungen (31, 25) angeordnet ist.

16. Luft-Wasser-Wärmepumpe nach einem der Ansprüche 13 bis 15, **dadurch gekennzeichnet, dass** der Lüfter (22) im Luftkanal (21) zwischen den abführenden (23, 32) und den zuführenden Leitungen (31, 25) angeordnet ist.

17. Luft-Wasser-Wärmepumpe nach einem der Ansprüche 13 bis 16, **dadurch gekennzeichnet, dass** vor oder nach dem im Luftkanal (21) angeordneten Wärmeübertrager (13) mindestens eine Drosselklappe (37, 38) vorgesehen ist.

18. Luft-Wasser-Wärmepumpe nach Anspruch 17, **dadurch gekennzeichnet, dass** mindestens eine Drosselklappe (37, 38) eine Jalousieklappe ist.

19. Luft-Wasser-Wärmepumpe nach einem der Ansprüche 2 bis 18, **dadurch gekennzeichnet, dass** die eingesetzten Ventile und Klappen eine Einrichtung zur Konstantvolumenstromregelung besitzen.

20. Verfahren zum Betrieb einer Luft-Wasser-Wärmepumpe gemäß einem der vorangegangenen Ansprüche 18 oder 19, **dadurch gekennzeichnet, dass** während eines Entfrostungsvorgangs die Klappen (37, 38) vor und/oder nach dem als Verdampfer betriebenen Wärmeübertrager (13) geschlossen werden und die Öffnungen, die der Spülung des Wärmepumpengehäuses und des Kapselgehäuses (33) dienen, geöffnet werden, während der Lüfter (22) auf einer geringen Drehzahl betrieben wird.

## Claims

1. An air-to-water heat pump for the safe operation of a counter-clockwise thermodynamic cycle using a hazardous working fluid, which is circulated in a closed, hermetically sealed working fluid circuit and which, when in use, can be installed in a building (1), comprising
- at least one compressor (10) for working fluid,
- at least one expansion device (11) for the working fluid,
- at least two heat exchangers (12, 13) for the working fluid, each with at least two connections (19, 20) for heat exchanger fluids,
- a closed heat pump housing (2), which encompasses all devices connected to the closed working fluid circuit,
- ducts for supplying air (3) from the environment outside the building (1),
- ducts for discharging air (4) to the environment outside the building,
- a fan (22) for conveying outside air to one of the two heat exchangers (13) through the ducts (21) for supplying and extracting air from and to the environment, wherein
- at least one branch (31) is provided to the ducts for supplying air (3) from the environment outside the building (1) and the ducts for discharging air (4) to the environment outside the building (1),
- at least one further opening (32) to the heat pump housing (2) is provided,
- the branch (31) leading to the air supply ducts (3) from the environment outside the building (1) and the air exhaust ducts (4) to the environment outside the building (1) is connected to the closed heat pump housing (2) in such a way that it can be shut off,
**characterised in that**
a ventilation system for the building (1) is provided, wherein a branch (23) is arranged from the outdoor air (3) drawn in from the environment to condition the outdoor air for the building (1), and distribution systems for the conditioned supply air within the building (1) are provided, exhaust devices for the stale exhaust air (5) from the building (1) are provided, and the heat from the exhaust air (25) discharged from the building (1) is utilised for heating or cooling purposes by means of one of the two heat exchangers (13, 12),
and an air duct (21) is provided which connects the openings (23, 24, 25, 31, 32) or their ducts for supplying and extracting air (3, 4) from the environment and the building (1), and which contains one of the two heat exchangers (12, 13) of the heat pump and the fan (22).

2. Air-to-water heat pump according to claim 1, **characterised in that** the branch (31) leading to the ducts for supplying air (3) from the environment outside the building (1) and the ducts for discharging air (4) to the environment outside the building (1) is connected to the closed heat pump housing (2) **in such a way that** it can be shut off by a spring-loaded non-return valve.

3. Air-to-water heat pump according to claim 1, **characterised in that** the branch (31) leading to the pipes for supplying air (3) from the environment outside the building (1) and the pipes for discharging air (4) to the environment outside the building (1) is connected to the sealed heat pump housing (2) in such a way that it can be shut off by a diaphragm non-return valve.

4. An air-to-water heat pump according to any one of claims 1 to 3, **characterised in that** at least one further encapsulated housing (33) is provided within the sealed heat pump housing (2), which houses a compressor (10) for working fluid, an expansion device (11) for the working fluid and at least one of the heat exchangers (12), and which provides a purge air inlet (34) with a duct and a purge air outlet (35) with a duct for purge air.

5. Air-to-water heat pump according to claim 4, **characterised in that** the purge air inlet (34) with duct is provided in the capsule housing (33) as a second branch from the ducts for supplying air (3) from the environment outside the building (1) and the ducts for discharging air (4) to the environment outside the building (1).

6. Air-to-water heat pump according to claim 4, **characterised in that** the purge air inlet (34) with a duct leading to the further capsule housing (33) is sealable.

7. Air-to-water heat pump according to claim 6, **characterised in that** the purge air inlet (34) with a duct leading to the additional enclosure (33) can be shut off by a spring-loaded non-return valve.

8. Air-to-water heat pump according to claim 6, **characterised in that** the purge air inlet (34) with a conduit leading to the additional capsule housing (33) can be shut off by a diaphragm non-return valve.

9. An air-to-water heat pump according to any one of claims 1 to 8, **characterised in that** the sealable openings (31, 32, 34, 35) or their conduits can be opened or closed by a sensor signal via motor-driven flaps or valves.

10. An air-to-water heat pump according to any one of claims 1 to 9, **characterised in that** a further supply fan (36) is provided in one of the openings (31, 32, 34, 35) or their ducts.

11. Air-to-water heat pump according to claim 10, **characterised in that** the additional blower (36) can be actuated by a sensor signal.

12. An air-to-water heat pump according to any one of claims 10 or 11, **characterised in that the** fan (22) for conveying outdoor air to one of the two heat exchangers (13) via the ducts (21) for supplying and extracting air from and to the environment, and/or the supply fan (36) each have a battery- or accumulator-backed emergency power supply which can be switched on automatically in the event of a power failure.

13. Air-to-water heat pump according to any one of claims 1 to 12, **characterised in that** the ducts (23, 32) leading from the air duct (21) into the heat pump housing (2) are connected, in the direction of flow, upstream of the openings or ducts (24, 25, 31) supplying air to the air duct (21).

14. Air-to-water heat pump according to claim 13, **characterised in that** the duct (32) leading into the heat pump housing (2) from the air duct (21) is connected on the pressure side behind the fan (22), and the purge air outlet (35) leading from the heat pump housing (2) into the air duct (21) is connected, together with its duct, on the suction side in front of the fan (22).

15. Air-to-water heat pump according to claim 14, **characterised in that** the heat exchanger (13) is arranged in the air duct (21) between the outlet (23, 32) and inlet (31, 25) pipes.

16. An air-to-water heat pump according to any one of claims 13 to 15, **characterised in that** the fan (22) is arranged in the air duct (21) between the exhaust (23, 32) and supply (31, 25) ducts.

17. An air-to-water heat pump according to any one of claims 13 to 16, **characterised in that** at least one throttle valve (37, 38) is provided upstream or downstream of the heat exchanger (13) arranged in the air duct (21).

18. An air-to-water heat pump according to claim 17, **characterised in that** at least one throttle valve (37, 38) is a louvre valve.

19. An air-to-water heat pump according to any one of claims 2 to 18, **characterised in that** the valves and dampers used comprise a means for constant volume flow control.

20. A method for operating an air-to-water heat pump in accordance with one of the preceding claims 18 or 19, **characterised in that,** during of a defrosting process, the flaps (37, 38) upstream and/or downstream of the heat exchanger (13), which is operated as an evaporator, are closed, and the openings used for flushing the heat pump housing and the capsule housing (33) are opened, whilst the fan (22) is operated at a low speed.

## Revendications

1. Pompe à chaleur air-eau pour la mise en œuvre sûre d'un processus à cycle thermodynamique tournant à gauche au moyen d'un fluide de travail dangereux, lequel est guidé dans un circuit de fluide de travail fermé et hermétiquement étanche et peut être installé dans un bâtiment (1) en cas d'application, présentant
- au moins un compresseur (10) pour du fluide de travail,
- au moins un appareil de détente (11) pour du fluide de travail,
- au moins deux échangeurs de chaleur (12, 13) pour du fluide de travail avec respectivement au moins deux raccords (19, 20) pour des fluides d'échangeur de chaleur,
- un boîtier de pompe à chaleur fermé (2), lequel comprend tous les appareils raccordés au circuit de fluide de travail fermé,
- des conduites pour l'alimentation en air (3) provenant de l'environnement extérieur au bâtiment (1),
- des conduites d'évacuation d'air (4) vers l'environnement extérieur au bâtiment,
- un ventilateur (22) destiné à acheminer l'air extérieur vers un des deux échangeurs de chaleur (13) par les conduites (21) d'alimentation et d'évacuation d'air depuis et vers l'environnement, dans laquelle
- au moins une dérivation (31) est prévue vers les conduites d'alimentation en air (3) provenant de l'environnement extérieur au bâtiment (1) et vers les conduites d'évacuation d'air (4) vers l'environnement extérieur au bâtiment (1),
- au moins une ouverture supplémentaire (32) est prévue vers le boîtier de la pompe à chaleur (2),
- la dérivation (31) vers les conduites d'alimentation en air (3) provenant de l'environnement extérieur au bâtiment (1) et vers les conduites d'évacuation d'air (4) vers l'environnement extérieur au bâtiment (1) est connectée de manière verrouillable au boîtier de pompe à chaleur fermé (2),
**caractérisée en ce que**
un dispositif de ventilation est prévu pour le bâtiment (1), dans laquelle une dérivation (23) est configurée à partir de l'air extérieur (3) aspiré de l'environnement pour conditionner l'air extérieur pour le bâtiment (1), des appareils de distribution de l'air d'alimentation conditionné sont prévus dans le bâtiment (1), des dispositifs d'évacuation de l'air vicié (5) hors du bâtiment (1) sont prévus et la chaleur de l'air vicié (25) évacué du bâtiment (1) est rendue utile à des fins de chauffage ou de refroidissement au moyen d'un échangeur de chaleur (13) parmi les deux échangeurs de chaleur (13, 12), et une conduite d'air (21) est prévue, qui connecte les ouvertures (23, 24, 25, 31, 32) ou leurs conduites pour l'alimentation et l'évacuation d'air (3, 4) provenant de l'environnement et du bâtiment (1), et contient un échangeur de chaleur (13) parmi les deux échangeurs de chaleur (12, 13) de la pompe à chaleur et du ventilateur (22).

2. Pompe à chaleur air-eau selon la revendication 1, **caractérisée en ce que** la dérivation (31) vers les conduites d'alimentation en air (3) provenant de l'environnement extérieur au bâtiment (1) et vers les conduites d'évacuation d'air (4) vers l'environnement extérieur au bâtiment (1) est connectée au boîtier de pompe à chaleur fermé (2) de manière verrouillable avec un clapet anti-retour à ressort.

3. Pompe à chaleur air-eau selon la revendication 1, **caractérisée en ce que** la dérivation (31) vers les conduites d'alimentation en air (3) provenant de l'environnement extérieur au bâtiment (1) et vers les conduites d'évacuation d'air (4) vers l'environnement extérieur au bâtiment (1) est connectée au boîtier de pompe à chaleur fermé (2) de manière verrouillable par un clapet anti-retour à membrane.

4. Pompe à chaleur air-eau selon l'une quelconque des revendications 1 à 3, **caractérisée en ce qu'**à l'intérieur du boîtier de pompe à chaleur fermé (2), au moins un autre boîtier encapsulé (33) est prévu, lequel loge un compresseur (10) pour fluide de travail, un appareil de détente (11) pour fluide de travail et au moins un parmi les échangeurs de chaleur (12), et lequel prévoit une ouverture d'admission d'air de purge (34) avec conduite et une ouverture d'évacuation d'air de purge (35) avec conduite pour l'air de purge.

5. Pompe à chaleur air-eau selon la revendication 4, **caractérisée en ce que** l'ouverture d'admission d'air de purge (34) est prévue avec une conduite menant au boîtier de capsule (33) en tant que seconde dérivation à partir des conduites d'alimentation en air (3) provenant de l'environnement extérieur au bâtiment (1) et des conduites d'évacuation d'air (4) vers l'environnement extérieur au bâtiment (1).

6. Pompe à chaleur air-eau selon la revendication 4, **caractérisée en ce que** l'ouverture d'admission d'air de purge (34) avec conduite vers le boîtier de capsule supplémentaire (33) est verrouillable.

7. Pompe à chaleur air-eau selon la revendication 6, **caractérisée en ce que** l'ouverture d'admission d'air de purge (34) avec conduite vers le boîtier de capsule supplémentaire (33) est verrouillable par un clapet anti-retour à ressort.

8. Pompe à chaleur air-eau selon la revendication 6, **caractérisée en ce que** l'ouverture d'admission d'air de purge (34) avec conduite vers le boîtier de capsule supplémentaire (33) est verrouillable par un clapet anti-retour à membrane.

9. Pompe à chaleur air-eau selon l'une quelconque des revendications 1 à 8, **caractérisée en ce que** les ouvertures verrouillables (31, 32, 34, 35) ou leurs conduites peuvent être ouvertes ou fermées par un signal de capteur au moyen de clapets ou de vannes à commande motorisée.

10. Pompe à chaleur air-eau selon l'une quelconque des revendications 1 à 9, **caractérisée en ce qu'**un ventilateur de refoulement supplémentaire (36) est prévu dans une des ouvertures (31, 32, 34, 35) ou leurs conduites.

11. Pompe à chaleur air-eau selon la revendication 10, **caractérisée en ce que** le ventilateur de refoulement supplémentaire (36) peut être actionné par un signal de capteur.

12. Pompe à chaleur air-eau selon l'une quelconque des revendications 10 ou 11, **caractérisée en ce que** le ventilateur (22) destiné à acheminer l'air extérieur vers un des deux échangeurs de chaleur (13) par les conduites (21) d'alimentation et d'évacuation d'air depuis et vers l'environnement et/ou le ventilateur de refoulement (36) disposent chacun d'une alimentation de secours alimentée par batterie ou accumulateur, qui peut être activée automatiquement en cas de coupure de courant.

13. Pompe à chaleur air-eau selon l'une quelconque des revendications 1 à 12, **caractérisée en ce que** les conduites (23, 32) évacuant l'air de la conduite d'air (21) vers le boîtier de pompe à chaleur (2) sont raccordées dans le sens d'écoulement en amont des ouvertures ou conduites (24, 25, 31) alimentant le canal d'air (21).

14. Pompe à chaleur air-eau selon la revendication 13, **caractérisée en ce que** la conduite (32) évacuant l'air du canal d'air (21) vers le boîtier de pompe à chaleur (2) est raccordée côté refoulement en aval du ventilateur (22) et l'ouverture de sortie d'air de purge (35) avec conduite partant du boîtier de pompe à chaleur (2) vers la conduite d'air (21) sont raccordées côté aspiration en amont du ventilateur (22).

15. Pompe à chaleur air-eau selon la revendication 14, **caractérisée en ce que** l'échangeur de chaleur (13) est disposé dans le canal d'air (21) entre les conduites de sortie (23, 32) et d'alimentation (31, 25).

16. Pompe à chaleur air-eau selon l'une quelconque des revendications 13 à 15, **caractérisée en ce que** le ventilateur (22) est disposé dans le canal d'air (21) entre les conduites d'évacuation (23, 32) et d'alimentation (31, 25).

17. Pompe à chaleur air-eau selon l'une quelconque des revendications 13 à 16, **caractérisée en ce qu'**au moins un clapet d'étranglement (37, 38) est prévu en amont ou en aval de l'échangeur de chaleur (13) disposé dans le canal d'air (21).

18. Pompe à chaleur air-eau selon la revendication 17, **caractérisée en ce qu'**au moins un clapet d'étranglement (37, 38) est un clapet à lamelles.

19. Pompe à chaleur air-eau selon l'une quelconque des revendications 2 à 18, **caractérisée en ce que** les vannes et clapets utilisés comportent un appareil de régulation de débit volumique constant.

20. Procédé de fonctionnement d'une pompe à chaleur air-eau selon l'une quelconque des revendications 18 ou 19 précédentes, **caractérisé en ce que**, pendant une opération de dégivrage, les clapets (37, 38) en amont et/ou en aval de l'échangeur de chaleur (13) fonctionnant en tant qu'évaporateur sont fermés et les ouvertures qui servent au rinçage du boîtier de pompe à chaleur et du boîtier de capsule (33) sont ouvertes pendant que le ventilateur (22) fonctionne à faible vitesse.
